# EUROPEAN PATENT APPLICATION

(11) **EP 1 795 724 A1**
(43) Date of publication of application: **13.06.2007**
(21) Application number: 05772485.8
(22) Date of filing: 22.08.2005
(51) Int. Cl.: F01N 3/24, B01D 53/94, B01D 53/86, F01N 3/08

(54) **EXHAUST GAS PURIFIER**

(30) Priority: 23.08.2004 JP 2004242292
(71) Applicant: Hino Motors, Ltd., Hino-shi, Tokyo 191-8660 (JP)
(72) Inventor: SATO, Shinya, Hino Motors, Ltd., Hino-shi, Tokyo 191-8660 (JP)
(74) Representative: Köhler, Walter
(86) International application number: PCT/JP2005/015190
(87) International publication number: WO 2006/022214

(57) **Abstract**

Active temperature areas of selective reduction catalysts are expanded more than ever before so as to obtain high NOₓ reduction ratio in a larger exhaust temperature range.

Disclosed is an exhaust emission control device with selective reduction catalyst incorporated in an exhaust pipe (9), the catalyst having enhanced reaction selectivity so as to selectively react NOₓ with ammonia even in the presence of oxygen, urea water 16 being added as reducing agent upstream of the catalyst by urea water adding means (urea water tank (13), urea water supply pipe (14), supply pump (15) and injection nozzle (17)) so as to reduce and purify NOₓ. The catalyst comprises two or high-and low-temperature-active catalysts (11) and (12) with different active temperature areas. The catalysts are arranged in series in such a manner that the catalysts (11) and (12) with relatively high and low active temperature areas are positioned upstream and downstream, respectively.

## Description

### Technical Field

The present invention relates to an exhaust emission control device applied to an internal combustion engine such as a diesel engine.

### Background Art

Conventionally, some diesel engines have selective reduction catalyst incorporated in an exhaust pipe through which exhaust gas flows, said catalyst having a feature of selectively reacting NOₓ with a reducing agent even in the presence of oxygen; a required amount of reducing agent is added upstream of the catalyst to be reacted with NOₓ (nitrogen oxides) in exhaust gas on the catalyst to thereby reduce a concentration of the discharged NOₓ.

Meanwhile, effectiveness of ammonia (NH₃) used as a reducing agent for reduction and purification of NOₓ is well known in a field of industrial flue gas denitration, for example, in a plant. However, in a field of automobile where safety is hard to assure as to running with ammonia itself being loaded, researches have been made nowadays on use of nontoxic urea water as the reducing agent (see, for example, Reference 1). [Reference 1] JP 2002-161732A

More specifically, addition of the urea water to the exhaust gas upstream of the selective reduction catalyst causes the urea water to be decomposed into ammonia and carbon monoxide according to the following equation, and NOₓ in the exhaust gas on the catalyst is satisfactorily reduced and purified by ammonia.

(NH₂)₂CO + H₂O → 2NH₃ + CO₂ ... Equation 1

### Summary of the Invention

### Problems to be Solved by the Invention

However, in such kind of exhaust emission control device using the urea water as reducing agent, an active temperature area of selective reduction catalyst may differ depending upon constituent of the catalyst. Therefore, selective reduction catalyst must be properly selected so as to have an active temperature area in conformity with an operation mode of an applied vehicle. An active temperature area of selective reduction catalyst is, however, generally smaller than an exhaust temperature range of the vehicle so that, in fact, a high NOₓ reduction ratio has been obtained only at a part of the exhaust temperature range of the vehicle. Thus, expansion in active temperature area of selective reduction catalyst remains one of large tasks to be settled.

The invention was made in view of the above and has its object to expand an active temperature area of selective reduction catalyst more than ever before so as to obtain high NOₓ reduction ratio in a larger exhaust temperature range.

### Means or Measures for Solving the Problems

The invention is directed to an exhaust emission control device with selective reduction catalyst incorporated in an exhaust pipe, said catalyst having enhanced reaction selectivity so as to selectively react NOₓ with ammonia even in the presence of oxygen, urea water being added as reducing agent upstream of the selective reduction catalyst by urea water adding means so as to reduce and purify NOₓ, comprising said selective reduction catalyst in the form of two catalysts with different active temperature areas, said catalysts being arranged in series in such a manner that the catalysts with higher and lower active temperature areas are positioned upstream and downstream, respectively.

Then, in a temperature area (lower temperature area) which brings about high activity of the downstream catalyst, the activity of the upstream catalyst is not so high that the upstream catalyst has low consumption of ammonia produced by addition of the urea water. Most of ammonia passes through the upstream catalyst and reaches the downstream catalyst while it is unreacted. On the downstream catalyst which is in a highly active state, NOₓ in the exhaust gas is effectively reduced and purified by ammonia.

As the temperature of the exhaust gas increases further from such state, ammonia is used as reducing agent both in the upstream and downstream so that performances of both the catalysts exhibit synergistically, resulting in attainment of NOₓ reduction performance higher than that obtained in the case of a single catalyst.

Further, in a temperature area (higher temperature area) which brings about high activity of the upstream catalyst, most of ammonia produced by addition of the urea water is effectively used as reducing agent on the upstream catalyst which is in a highly active state, so that NOₓ in the exhaust gas on the upstream catalyst is effectively reduced and purified by ammonia.

The upstream catalyst with higher active temperature area brings about NOₓ reduction ratio higher than the downstream catalyst with lower active temperature area when the catalyst is in a highly active state. Thus, in the higher temperature area, it is most effective that most of ammonia produced by addition of the urea water is used as reducing agent on the upstream catalyst; in order to supply ammonia to the catalyst with higher active temperature area to be used with no waste, such catalyst is arranged upstream.

More specifically, if the catalyst with lower active temperature area were arranged upstream, ammonia would be consumed halfway on the upstream catalyst with some degree of activity in higher temperature area, disadvantageously resulting in failure to introduce a sufficient amount of ammonia as reducing agent into the downstream catalyst by which high NOₓ reduction ratio is to be inherently obtained.

### Effects of the Invention

An exhaust emission control device of the invention as mentioned above in which two selective reduction catalysts with different active temperature areas are used in combination can bring about excellent effects that active temperature areas of selective reduction catalysts are expanded more than ever before so as to obtain high NOₓ reduction ratio in a larger exhaust temperature range and that, obtained in an intermediate temperature area where the performances of both the selective reduction catalysts are brought about synergistically, is NOₓ reduction ratio which is higher than that obtained in a single catalyst, resulting in improvement of the NOₓ reduction performance.

### Brief Description of the Drawings

[Fig. 1] A schematic view showing an embodiment of the invention.
[Fig. 2] A graph showing relationship between NOₓ reduction ratio and temperature.

### Explanation of the Reference Numerals

- 1: engine
- 7: exhaust gas
- 9: exhaust pipe
- 11: high-temperature-active selective reaction catalyst (selective reduction catalyst with higher active temperature area)
- 12: low-temperature-active selective reaction catalyst (selective reduction catalyst with lower active temperature area)
- 13: urea water tank (urea water adding means)
- 14: urea water supply pipe (urea water adding means)
- 15: supply pump (urea water adding means)
- 16: urea water
- 17: injection nozzle (urea water adding means)

### Best Mode for Carrying Out the Invention

An embodiment of the invention will be described in conjunction with the drawings.

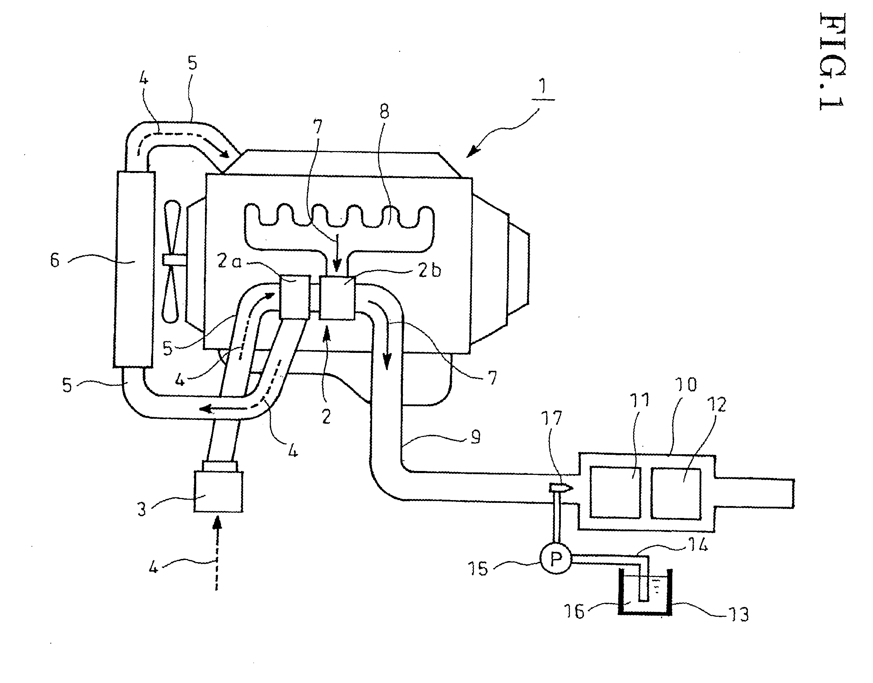

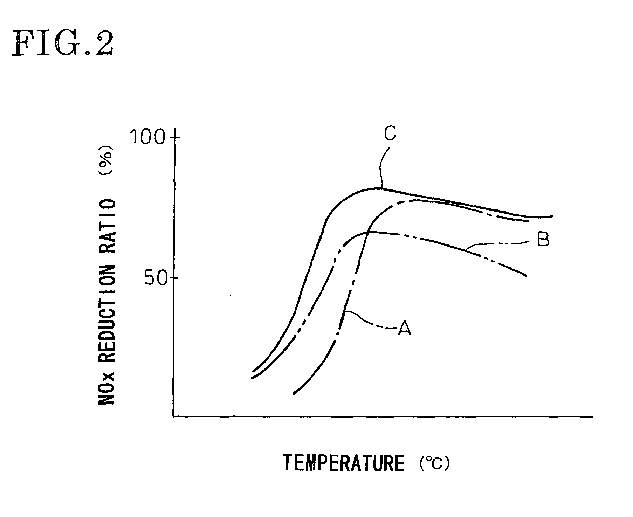

Figs. 1 and 2 show the embodiment of the invention in which reference numeral 1 denotes a diesel engine. The engine 1 illustrated has a turbocharger 2 with a compressor 2a to which air 4 from an air cleaner 3 is fed via an intake air pipe 5. The air 4 thus pressurized in the compressor 2a is further fed to an intercooler 6 where it is cooled. The cooled air 4 from the intercooler 6 is guided to an intake manifold (not shown) to be introduced into each of cylinders in the engine 1.

Exhaust gas 7 discharged from each of the cylinders in the engine 1 is fed via an exhaust manifold 8 to a turbine 2b of the turbocharger 2. The exhaust gas 7 thus having driven the turbine 2b is discharged via an exhaust pipe 9 to outside of the vehicle.

Incorporated in the exhaust pipe 9 through which the exhaust gas 7 flows is a casing 10. Received on an upstream side in the casing 10 is a high-temperature-active selective reduction catalyst 11 with a higher active temperature area and with an enhanced reaction selectivity for selective reaction of NOₓ with ammonia even in the presence of oxygen; and received on a downstream side in the casing 10 is a low-temperature-active selective reduction catalyst 12 with a lower active temperature area and with a similarly enhanced reaction selectivity.

The upstream high-temperature-active catalyst 11 may be vanadic catalyst. The downstream low-temperature-active catalyst 12 may be Cu-, Fe-, Co- or Ag-zeolitic catalyst or Cu-, Fe-, Co- or Ag-alumina catalyst.

In the embodiment illustrated, an inlet zone of the casing 10 in the exhaust pipe is connected through a urea water supply line 14 to a urea water tank 13 arranged in a required site. Actuation of a supply pump 15 incorporated in the supply line 14 causes urea water 16 in the tank 13 to be added through an injection nozzle 17 to the inlet zone of the casing 10. The urea water tank 13, urea water supply pipe 14, supply pump 15, injection nozzle 17 constitute urea water adding means.

According to the exhaust emission control device thus constructed, in a temperature area (lower temperature area) which brings about high activity of the downstream low-temperature-active catalyst 12, the activity of the upstream high-temperature-active catalyst 11 is not so high that the upstream high-temperature-active catalyst 11 has low consumption of ammonia produced by addition of the urea water 16. Most of ammonia passes through the upstream catalyst 11 and reaches the downstream catalyst 12 while it is unreacted. On the low-temperature-active catalyst 12 which is in a highly active state, NOₓ in the exhaust gas 7 is effectively reduced and purified by ammonia.

As the temperature of the exhaust gas 7 increases further from such state, ammonia is used as reducing agent both in the upstream and in the downstream so that performances of both the high- and low-temperature-active catalysts 11 and 12 exhibit synergistically, resulting in attainment of NOₓ reduction performance higher than that obtained in the case of a single catalyst.

Further, in a temperature area (higher temperature area) which brings about high activity of the upstream high-temperature-active catalyst 11, most of ammonia produced by addition of the urea water 16 is effectively used as reducing agent on the high-temperature-active catalyst 11 which is in a highly active state, so that NOₓ in the exhaust gas 7 on the high-temperature-active catalyst 11 is effectively reduced and purified by ammonia.

The upstream high-temperature-active catalyst 11 with higher active temperature area and in a highly active state brings about NOₓ reduction ratio higher than the downstream low-temperature-active catalyst 12 in a highly active state. Thus, in such relatively high temperature area, it is most effective that most of ammonia produced by addition of the urea water 16 is used as reducing agent on the upstream high-temperature-active catalyst 11; in order to supply ammonia to the high-temperature-active catalyst 11 to be used with no waste, such high-temperature-active catalyst 11 is arranged upstream.

More specifically, in the low-temperature-active catalyst 12 with lower active temperature area were arranged upstream, ammonia would be consumed halfway on the upstream low-temperature-active catalyst 12 with some degree of activity in the higher temperature area, disadvantageously resulting in failure to introduce a sufficient amount of ammonia as reducing agent into the downstream high-temperature-active catalyst 11 by which high NOₓ reduction ratio is to be inherently obtained.

Thus, according to the above-mentioned embodiment, high- and low-temperature-active catalysts 11 and 12 with different active temperature areas are used in combination so that active temperature areas of the catalysts are expanded more than ever before so as to obtain high NOₓ reduction ratio in a larger exhaust temperature range. Moreover, obtained in an intermediate temperature area where the performances of the high- and low-temperature-active catalysts 11 and 12 are brought about synergistically, is NOₓ reduction ratio which is higher than that obtained in a single catalyst, resulting in improvement of the NOₓ reduction performance.

In fact, according to results of experiments conducted by the inventor for comparison between Cases A and B where the high- and low-temperature-active catalyst 11 were singularly used, respectively, and Case C where the high- and low-temperature-active catalysts 11 and 12 were used in combination, it was confirmed as shown in graphs of Fig. 2 that the active temperature area in Case C is expansive in comparison with those of the cases A and B so that high NOₓ reduction ratio is obtained over a lager exhaust temperature range and that the case C can obtain higher NOₓ reduction ratio than cases A and B. In the graph of Fig. 2, ordinate and abscissa represent NOₓ reduction ratio and temperature, respectively.

It is to be understood that an exhaust emission control device of the invention is not limited to the above embodiment and that various changes and modifications may be made without departing from the scope of the invention.

## Claims

1. An exhaust emission control device with selective reduction catalyst incorporated in an exhaust pipe(9), said catalyst having enhanced reaction selectivity so as to selectively react NOₓ with ammonia even in the presence of oxygen, urea water being added as reducing agent upstream of the selective reduction catalyst by urea water adding means (13, 14, 15, 17) so as to reduce and purify NOₓ, comprising said selective reduction catalyst in the form of two catalysts (11, 12) with different active temperature areas, said catalysts being arranged in series in such a manner that the catalysts with higher and lower active temperature areas are positioned upstream and downstream, respectively.
